# EUROPÄISCHE PATENTSCHRIFT

(11) **EP 1 429 081 B1**
(45) Veröffentlichungstag und Bekanntmachung des Hinweises auf die Patenterteilung: **27.12.2006**
(21) Anmeldenummer: 03028447.5
(22) Anmeldetag: 12.12.2003
(51) Int. Cl.: F24F 7/06, F24F 1/00, F24F 13/10, F24F 11/053, F24F 12/00

(54) **Belüftungssystem zur Raumbelüftung**
Ventilation system for room ventilation
Système de ventilation pour la ventilation d'un local

(30) Priorität: 12.12.2002 DE 20219224 U; 11.01.2003 DE 20300376 U
(43) Veröffentlichungstag der Anmeldung: 16.06.2004
(73) Patentinhaber: TROX GmbH, 47506 Neukirchen-Vluyn (DE)
(72) Erfinder: Sefker, Thomas, Dr., 47506 Neukirchen-Vluyn (DE); Sadkowski, Manfred, 47608 Geldern (DE); Baumeister, Gregor, 47802 Krefeld (DE); Rohde, Christoph, 45470 Mülheim/Ruhr (DE)
(74) Vertreter: DR. STARK & PARTNER

(56) Entgegenhaltungen:
- DE-A- 2 015 943
- GB-A- 1 416 520
- US-A- 5 031 515
- PATENT ABSTRACTS OF JAPAN vol. 011, no. 114 (M-579), 10. April 1987 (1987-04-10) & JP 61 259041 A (MITSUBISHI ELECTRIC CORP), 17. November 1986 (1986-11-17)
- PATENT ABSTRACTS OF JAPAN vol. 011, no. 114 (M-579), 10. April 1987 (1987-04-10) & JP 61 259042 A (MITSUBISHI ELECTRIC CORP), 17. November 1986 (1986-11-17)

## Beschreibung

Die Erfindung betrifft ein Belüftungssystem zur Raumbelüftung mit einem sich zwischen einer vorzugsweise gebäudeaußenseitigen Lufteinlassöffnung und einer vorzugsweise rauminnenseitigen Luftauslassöffnung erstreckenden Luftkanal, wobei in dem Luftkanal eine Luftfördereinrichtung sowie eine weitere Lufteinlassöffnung zum Ansaugen von über dem Luftkanal befindlicher Luft, insbesondere von Raumluft, vorgesehen sind.

Derartige Belüftungssysteme, die einen Luftkanal mit einer vorzugsweise gebäudeaußenseitigen Lufteinlassöffnung und einer vorzugsweise rauminnenseitigen Luftauslassöffnung und eine in dem Luftkanal befindliche Luftfördereinrichtung aufweisen, werden beispielsweise als Unterflur- oder Brüstungsgeräte eingesetzt. Ferner weisen diese eine weitere Lufteinlassöffnung auf, über die über dem Luftkanal befindliche Luft, üblicherweise Raumluft, induktiv angesaugt wird. Diese weitere Lufteinlassöffnung ist auf der Abströmseite der Luftfördereinrichtung, d. h. in Strömungsrichtung gesehen hinter der Luftfördereinrichtung, in dem Luftkanal vorgesehen. Um eine große Induktion zur Erzielung hoher Absaugleistung im Bereich über der weiteren Lufteinlassöffnung zu erzielen, muss die Luft mit hoher Ausblasgeschwindigkeit aus der Luftfördereinrichtung ausgeblasen werden. Daher weist die Luftfördereinrichtung Düsen auf. Als Nachteil erweist sich, dass derartige Belüftungssysteme aufgrund der hohen Ausblasgeschwindigkeiten laut sind. Aus der US-PS 5,031,515 ist ein Belüftungssystem mit einem Luftkanal, der eine Lufteinlassöffnung und eine Luftauslassöffnung aufweist, bekannt, wobei in dem Luftkanal ein Ventilator und eine Klappe vorgesehen ist.

Aufgabe der Erfindung ist es, ein Belüftungssystem der vorbekannten Art derart zu verbessern, das geringere Schallemissionen aufweist und somit geräuschärmer und auch energetisch günstiger ist.

Diese Aufgabe wird dadurch gelöst, dass die weitere Lufteinlassöffnung auf der Ansaugseite der Luftfördereinrichtung in dem Luftkanal angeordnet ist, dass der Strömungsquerschnitt der Lufteinlassöffnung zur Bestimmung des über die Lufteinlassöffnung angesaugten Luftstroms mittels einer Verschließeinrichtung, insbesondere mittels einer Klappe, veränderbar und/oder verschließbar ist und dass die Verschließeinrichtung als selbsttätig arbeitender Regler ausgebildet ist. Durch die ansaugseitige Anordnung der weiteren Lufteinlassöffnung, d. h. in Strömungsrichtung gesehen vor der Luftfördereinrichtung, kann die Luftfördereinrichtung bei einem geringeren Druckniveau betrieben werden, so dass der geförderte Gesamtluftvolumenstrom, bestehend aus dem über die Lufteinlassöffnung und dem über die weitere Lufteinlassöffnung angesaugten Luftvolumenstrom, mit einer niedrigen Strömungsgeschwindigkeit aus der Luftfördereinrichtung ausgeblasen wird. Aufgrund der geringeren Druckverhältnisse und der niedrigeren Strömungsgeschwindigkeit ist das erfindungsgemäße Belüftungssystem insoweit geräuschärmer und energetisch günstiger, da der Druckaufbau zur Erzielung hoher Düsengeschwindigkeiten wie beim Stand der Technik nicht erforderlich ist.

Hierdurch kann die über die vorzugsweise gebäudeaußenseitige Lufteinlassöffnung angesaugte Luft beliebig eingestellt werden. Als Verschließeinrichtung kann beispielsweise ein Schieber oder eine Klappe eingesetzt werden. Die Klappe kann beispielsweise auf einer quer zur Strömungsrichtung angeordneten Welle schwenkbar gelagert sein. Die Bestimmung des Luftstroms kann einerseits in der Begrenzung des Volumenstroms auf einen maximal erlaubten Wert, z. B. zum Ausgleich von auf eine Fassade auftreffenden Windlasten, und andererseits in der Wahl einer bestimmten Klappenposition bestehen.

Derartige Volumenstromregler arbeiten nur mit der Kanalenergie und benötigen keinen Antrieb. Erreicht der in dem Luftkanal bzw. in dem Teilkanal strömende Volumenstrom einen vorher eingestellten Sollwert, wird beispielsweise eine als Verschließeinrichtung ausgebildete Klappe gegen eine Federkraft mehr und mehr in die Schließstellung verschwenkt, so dass hierdurch der Volumenstrom begrenzt wird.

Zweckmäßigerweise kann in dem Luftkanal zwischen der Lufteinlassöffnung und der weiteren Lufteinlassöffnung eine ein Strömen der Luft entgegen die bestimmungsgemäße Richtung verhindernde Einrichtung, insbesondere eine Rückschlagklappe, vorgesehen sein.

Zusätzlich kann in dem Luftkanal zwischen der Lufteinlassöffnung und der weiteren Lufteinlassöffnung ein Wärmetauscher vorgesehen sein. Mittels dieses Wärmetauschers kann beispielsweise die in einem separaten Abluftkanal strömende Abluft die Wärme entzogen und an die in dem Luftkanal strömende Zuluft weitergeleitet werden.

Um beispielsweise bei dem Belüftungssystem, bei dem die weitere Lufteinlassöffnung auf der Ansaugseite der Luftfördereinrichtung in dem Luftkanal angeordnet ist, das Verhältnis zwischen dem über die vorzugsweise gebäudeaußenseitige Lufteinlassöffnung und über die weitere Lufteinlassöffnung angesaugten Luftvolumenstrom zu beeinflussen, kann der Strömungsquerschnitt der weiteren Lufteinlassöffnung zur Bestimmung des über die weitere Lufteinlassöffnung angesaugten Luftstromes mittels einer Verschließeinrichtung, insbesondere mittels einer Klappe, veränderbar und/oder verschließbar sein. Ermöglicht beispielsweise die Verschließeinrichtung ein vollständiges Verschließen der weiteren Lufteinlassöffnung, wird bei Verschließen der weiteren Lufteinlassöffnung ausschließlich Luft über die gebäudeaußenseitige Lufteinlassöffnung angesaugt und über die vorzugsweise rauminnenseitige Luftauslassöffnung ausgeblasen. Je mehr die Verschließeinrichtung den Strömungsquerschnitt der weiteren Lufteinlassöffnung freigibt, wird auch mehr und mehr über dem Luftkanal befindliche Luft über die weitere Lufteinlassöffnung angesaugt. Bei der Verschließeinrichtung kann es sich beispielsweise um einen Schieber oder um eine Klappe handeln, die beispielsweise auf einer quer zur Strömungsrichtung angeordneten Welle schwenkbar gelagert ist. Andere Ausführungsformen sind selbstverständlich möglich. Die Bestimmung des Luftstroms kann einerseits in der Begrenzung des Volumenstroms auf einen maximal erlaubten Wert und andererseits in der Wahl einer bestimmten Klappenposition bestehen.

Die Verschließeinrichtung kann mittels eines Stellelementes, insbesondere mittels eines Stellmotors, betätigbar sein.

Der Stellmotor kann zur temperaturgeführten Betätigung der Verschließeinrichtung mit einer Temperaturmesseinrichtung, vorzugsweise mit einer die Raumtemperatur messenden Temperaturmesseinrichtung, verbunden sein. Eine Temperaturmesseinrichtung bietet sich z. B. an, wenn außerhalb des Raumes hohe Temperaturen herrschen und in dem Raum selbst die Raumluft heruntergekühlt werden soll. Zur Energieeinsparung wird der über die gebäudeaußenseitige Lufteinlassöffnung angesaugte Luftstrom durch geeignete Maßnahmen so weit wie möglich reduziert, so dass ein größerer Anteil an Luft über die weitere Lufteinlassöffnung durch Öffnen der Verschließeinrichtung angesaugt wird. Bei vollständigem Verschließen der gebäudeaußenseitige Lufteinlassöffnung ergibt sich ein reiner Umluftbetrieb.

Der Stellmotor kann zum Ausgleich der Eintrittsgeschwindigkeit der durch die Lufteinlassöffnung eintretenden Luft zur Betätigung der Verschließeinrichtung mit einer Messeinrichtung zur Bestimmung der Luftströmungsgeschwindigkeit, vorzugsweise mit einer die Luftströmungsgeschwindigkeit in der Lufteinlassöffnung messenden Messeinrichtung, verbunden sein. Eine solche Messeinrichtung bietet sich beispielsweise zum Abfangen von auf Gebäudefassaden wirkenden Windlasten an. Wird eine steigende Luftgeschwindigkeit trotz unveränderter Betriebsweise der Luftfördereinrichtung durch die in der Lufteinlassöffnung vorgesehene Messeinrichtung festgestellt, erlaubt dies Rückschlüsse beispielsweise auf eine auf die Fassade wirkende Windlast. Durch geeignete Maßnahmen wird der über die vorzugsweise gebäudeaußenseitige Lufteinlassöffnung eintretende Luftstrom reduziert und der Strömungsquerschnitt der weiteren Lufteinlassöffnung mittels der Verschließeinrichtung entsprechend vergrößert. Bei unmittelbar benachbarter und winklig zueinander Anordnung von Lufteinlassöffnung und weiterer Lufteinlassöffnung kann für beide Öffnungen z. B. nur eine Verschließeinrichtung vorgesehen sein. Durch Veränderung der Stellung der Verschließrichtung wird das Verhalten der über der Lufteinlassöffnung und der zweiten Lufteinlassöffnung angesaugten Luftstrom entsprechend variiert.

Bei einer anderen Ausführungsform kann die Verschließeinrichtung gegen eine Kraft, insbesondere gegen eine Gewichts- oder Federkraft, aus ihrer den Strömungsquerschnitt der weiteren Lufteinlassöffnung verschließenden Position in die den Strömungsquerschnitt der weiteren Lufteinlassöffnung freigebende Position verschwenkbar sein. Hierzu kann beispielsweise an die üblicherweise als Klappe ausgebildete Verschließeinrichtung auf der Anströmseite eine Zugfeder angreifen. Bei Anstieg des über die nicht durch das Verschließelement verschlossenen Lufteinlassöffnung angesaugten Luftstromes, wird die Verschließeinrichtung mehr und mehr entgegen die Federkraft der Zugfeder geöffnet, so dass Raumluft über die weitere Lufteinlassöffnung induziert wird.

Die Verschließeinrichtung kann mittels eines Stellelementes, insbesondere mittels eines Stellmotors, betätigbar sein.

Dabei kann der Stellmotor der Verschließeinrichtung in der Lufteinlassöffnung zur temperaturgeführten Betätigung der Verschließeinrichtung mit einer Temperaturmesseinrichtung, vorzugsweise mit einer die Außentemperatur messenden Temperaturmesseinrichtung, verbunden sein. Im Kühlbetrieb kann so der über die Lufteinlassöffnung angesaugte Luftstrom bei Überschreiten einer bestimmten Temperatur verringert werden, um z. B. Energiekosten zum Kühlen der gegenüber der Raumluft wärmeren Außenluft zu reduzieren.

Selbstverständlich ist es auch möglich, dass der Stellmotor der Verschließeinrichtung in der Lufteinlassöffnung zum Ausgleich der Eintrittsgeschwindigkeit der durch die Lufteinlassöffnung eintretenden Luft zur Betätigung der Verschließeinrichtung mit einer Messeinrichtung zur Bestimmung der Luftströmungsgeschwindigkeit, vorzugsweise mit einer die Luftströmungsgeschwindigkeit in der Lufteinlassöffnung messenden Messeinrichtung, verbunden ist.

Vorzugsweise kann im Bereich der Luftauslassöffnung(en) ein Wärmetauscher vorgesehen sein. Dieser Wärmetauscher kann auch die Luftauslassöffnung selbst bilden.

Das Belüftungssystem kann als Unterflur-, als Brüstungs- oder als Deckengerät ausgebildet sein.

Im Folgenden werden in der Zeichnung dargestellte Ausführungsbeispiele der Erfindung erläutert. Die in den abbildungen 1-4 dargestellten beispiele, sind nicht teil der erfindung. Es zeigen:
- Fig. 1: einen Schnitt durch ein Unterflurgerät,
- Fig. 2: einen Schnitt durch ein Brüstungsgerät,
- Fig. 3: einen Schnitt durch ein Unterflurgerät mit einer Temperaturmesseinrichtung,
- Fig. 4: einen Schnitt durch ein Unterflurgerät mit einer Messeinrichtung zum Ausgleich der Eintrittsgeschwindigkeit im Bereich der Lufteinlassöffnung,
- Fig. 5: ein weiteres Ausführungsbeispiel der Erfindung, wobei in der Lufteinlassöffnung eine Verschließeinrichtung vorgesehen ist,
- Fig. 6: den Gegenstand nach Fig. 5 mit einer zusätzlichen die weitere Lufteinlassöffnung verschließenden Verschließeinrichtung,
- Fig. 7: den Gegenstand nach Fig. 6 mit einer federbelasteten, die weitere Lufteinlassöffnung verschließenden Verschließeinrichtung,
- Fig. 8: den Gegenstand nach Fig. 6 mit einer gewichtsbelasteten, die weitere Lufteinlassöffnung verschließenden Verschließeinrichtung,
- Fig. 9: den Gegenstand nach Fig. 8 mit einem Wärmetauscher und
- Fig. 10: eine Draufsicht auf eine andere Ausführungsform eines erfindungsgemäßen als Unterflurgerät ausgebildeten Belüftungssystems.

In allen Figuren werden für gleiche bzw. gleichartige Bauteile übereinstimmende Bezugszeichen verwendet.

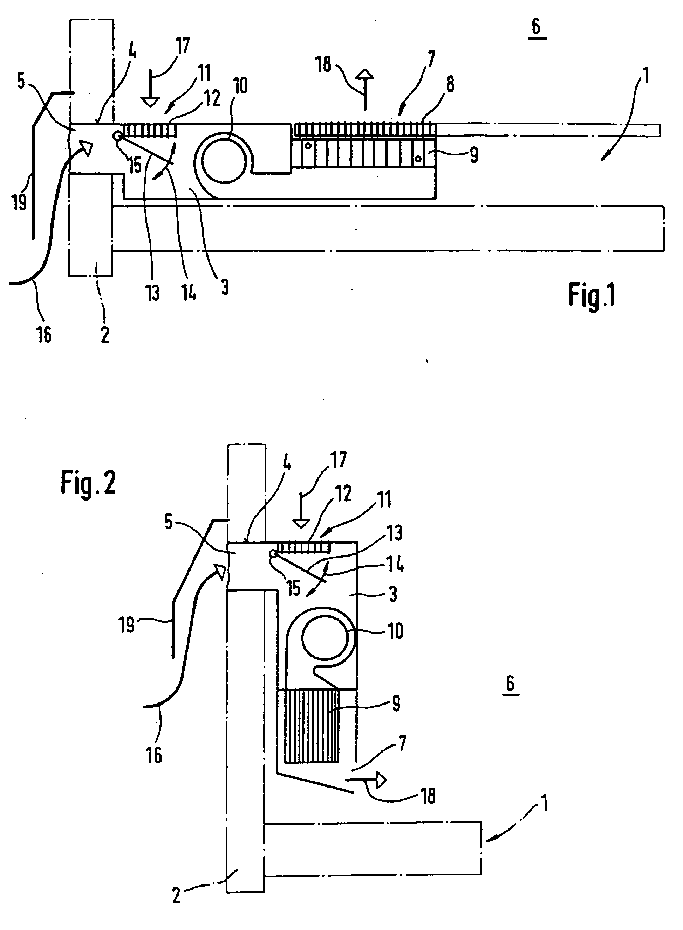

In Fig. 1 ist die Verwendung des erfindungsgemäßen Belüftungssystems als Unterflurgerät dargestellt, das in einem Raumboden 1 eines nicht näher dargestellten Gebäudes versenkt ist. An den Raumboden 1 grenzt eine lediglich teilweise dargestellte Raumwand 2 an.

Das Belüftungssystem selbst besteht aus einem Luftkanal 3, der eine seitliche, durch eine Ausnehmung 4 in der Raumwand 2 ragende gebäudeaußenseitige Lufteinlassöffnung 5 und an dem gegenüberliegenden Ende eine nach oben in den zu belüftenden Raum 6 gerichtete Luftauslassöffnung 7 aufweist. Die Luftauslassöffnung 7 ist oberseitig mit einem Gitter 8 abgedeckt, damit das Belüftungssystem auch in diesem Bereich begehbar ist. Dem Gitter 8 vorgeschaltet ist ein Wärmetauscher 9 zur Temperierung der Luft. In Strömungsrichtung gesehen vor dem Wärmetauscher 9 ist eine Luftfördereinrichtung 10 vorgesehen.

Zwischen der Lufteinlassöffnung 5 und der Luftfördereinrichtung 10 ist eine weitere Lufteinlassöffnung 11 vorgesehen, die ebenfalls nach oben in den Raum 6 gerichtet ist und in dem dargestellten Ausführungsbeispiel angrenzend an die Raumwand 2 angeordnet ist. Auch diese weitere Lufteinlassöffnung 11 weist ein oberseitiges Gitter 12 auf.

Mittels einer als Klappe 13 ausgebildeten Verschließeinrichtung ist der Strömungsquerschnitt der weiteren Lufteinlassöffnung 11 verschließbar. Die Klappe 13 selbst ist schwenkbar in Richtung des Pfeils 14 gelagert. Hierzu ist im Bereich der der gebäudeaußenseitigen Lufteinlassöffnung 5 zugewandten Kanten der weiteren Lufteinlassöffnung 11 eine Schwenkachse 15 vorgesehen, an der die Klappe 13 verschwenkbar angeschlagen ist.

In der in Fig. 1 dargestellten Position der Klappe 13 wird bei Betrieb der Luftfördereinrichtung 10 Luft in Richtung des Pfeils 16 über die gebäudeaußenseitige Lufteinlassöffnung 5 angesaugt. Gleichzeitig wird Raumluft über die weitere Lufteinlassöffnung 11 in Richtung des Pfeils 17 induziert und die Außenluft zusammen mit der induzierten Raumluft mittels der Luftfördereinrichtung 10 über den Wärmetauscher 9 in Richtung des Pfeils 18 in den zu belüftenden Raum transportiert.

Nimmt die Klappe 13 eine horizontale Klappenstellung ein, d. h. dass der Strömungsquerschnitt der weiteren Lufteinlassöffnung 11 völlig verschlossen wird, wird lediglich Außenluft in Richtung des Pfeils 16 mittels der Luftfördereinrichtung 10 angesaugt.

Bei einer senkrechten Stellung der Klappe 13 wird die gebäudeaußenseitige Lufteinlassöffnung 5 völlig verschlossen, so dass ein reiner Umluftbetrieb hergestellt wird. Die Klappe 13 ermöglicht insoweit ein vollständiges Verschließen entweder der Lufteintrittsöffnung 5 oder der weiteren Lufteinlassöffnung 11. In einer Zwischenstellung der Klappe 13, so wie es beispielsweise in Fig. 1 dargestellt wird, stellt sich ein entsprechendes Verhältnis von über die Lufteinlassöffnung 5 und die weitere Lufteinlassöffnung 11 angesaugter Luft ein.

Um beispielsweise das Eindringen von Regenwasser zu verhindern, ist ein die gebäudeaußenseitige Lufteinlassöffnung 5 zumindest teilweise überdeckendes Ableitblech 19 vorgesehen. Selbstverständlich sind auch andere Ausgestaltungen des Ableitbleches 19 denkbar.

In Fig. 2 ist der Einsatz des erfindungsgemäßen Belüftungssystems als Brüstungsgerät dargestellt. Im Gegensatz zu einem Unterflurgerät ist der Luftkanal 3 zwischen der weiteren Lufteinlassöffnung 11 und der Luftfördereinrichtung 10 nach unten abgewinkelt, so dass das Belüftungssystem vor der Raumwand 2 montiert werden kann. Auch hier ist die als Verschließeinrichtung ausgebildete Klappe 13 so angeordnet, dass in den beiden Endpositionen entweder die weitere Lufteinlassöffnung 11 oder die gebäudeaußenseitige Lufteinlassöffnung 5 völlig verschließbar sind.

Die Klappen 13 bei dem in Fig. 1 und 2 dargestellten Ausführungsbeispiel können beispielsweise manuell verstellbar sein. Es ist aber auch durchaus möglich, dass an der jeweiligen Schwenkachse 15 der Klappe 13 ein Stellmotor 20 angreift, so dass die betreffende Klappe 13 beispielsweise elektrisch oder pneumatisch verstellbar ist. Dies bietet sich insbesondere bei einer zentralen Steuerung diverser erfindungsgemäßer Belüftungssysteme an.

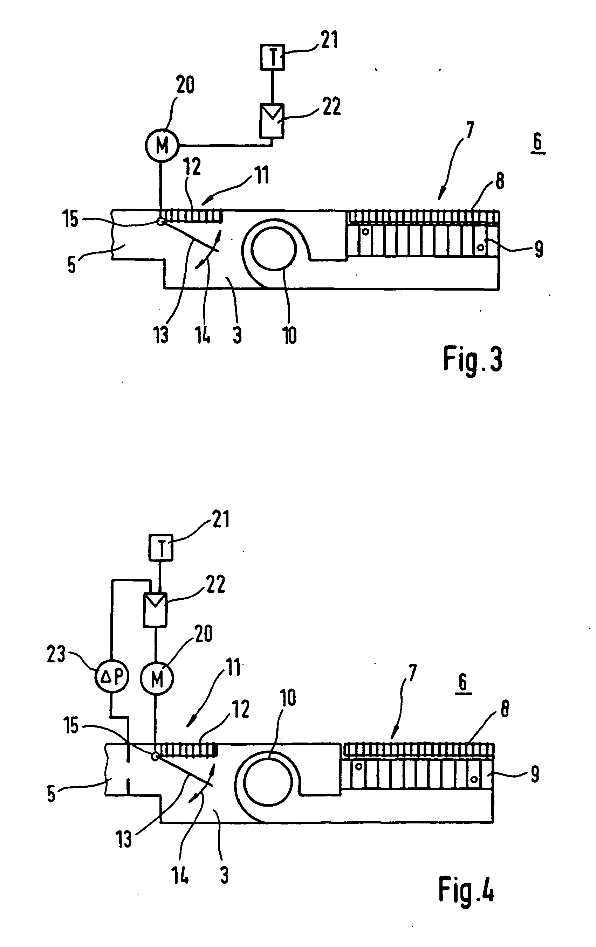

Bei der in Fig. 3 dargestellten Ausführungsform des erfindungsgemäßen Belüftungssystems ist der Stellmotor 20 mit einer Temperaturmesseinrichtung 21 verbunden. Diese Temperaturmesseinrichtung 21 ermittelt beispielsweise die Innentemperatur des zu belüftenden Raums. Abhängig von der gemessenen Temperatur wird in dem dargestellten Fall über eine Steuereinrichtung 22 ein entsprechendes Signal an den Stellmotor 20 ausgesandt, so dass dann die dem Signal entsprechende Position der Klappe 13 eingestellt werden kann. Eine derartige Temperaturmesseinrichtung 21 bietet sich beispielsweise bei hohen Außentemperaturen und bei niedrigeren gewünschten Raumtemperaturen an. Um unnötig hohe Kühlleistungen des Wärmetauschers 9 zu vermeiden, wird durch Veränderung der Stellung der Klappe 13 der über die gebäudeaußenseitige Lufteinlassöffnung 5 angesaugte Luftstrom reduziert, so dass das Belüftungssystem mehr und mehr in einem Umluftbetrieb betrieben wird.

Fig. 4 stellt ein erfindungsgemäßes Belüftungssystem dar, bei dem eine Messeinrichtung 23 zur Bestimmung einer Luftströmungsgeschwindigkeit, die in dem dargestellten Ausführungsbeispiel in der gebäudeaußenseitigen Lufteinlassöffnung 5 angeordnet ist, vorgesehen ist. Eine solche Messeinrichtung 23 bietet sich beispielsweise zum Ausgleich von auf eine Fassade wirkende Windlasten an. Die Messeinrichtung 23, die beispielsweise eine Druckdifferenz ermittelt, ist mit dem Stellmotor 20 über die Steuereinrichtung 22 verbunden. Wird beispielsweise eine hohe Luftströmungsgeschwindigkeit im Bereich der gebäudeaußenseitigen Lufteinlassöffnung 5 gemessen, obwohl die Leistung der Luftfördereinrichtung 10 nicht erhöht worden und die Klappenstellung unverändert ist, erlaubt dies Rückschlüsse auf höhere Windlasten. In diesem Fall wird von der Messeinrichtung 23 ein entsprechendes Signal an den Stellmotor 20 ausgesandt, so dass mittels der Klappe 13 der Strömungsquerschnitt der gebäudeaußenseitigen Lufteinlassöffnung 5 reduziert werden kann.

Bei dem in Fig. 4 dargestellten Ausführungsbeispiel weist das Belüftungssystem zusätzlich noch eine Temperaturmesseinrichtung 22 auf, so dass der Stellmotor 20 auch in Abhängigkeit der über die Temperaturmesseinrichtung 21 gemessenen Temperatur gesteuert werden kann.

Bei den in den Figuren 1 bis 4 dargestellten Ausführungsbeispielen sind die Lufteinlassöffnung 5 und die weitere Lufteinlassöffnung 11 unmittelbar benachbart und winklig zueinander angeordnet, so dass die Klappe 13 in ihren beiden Endstellungen entweder die Lufteinlassöffnung 5 oder die weitere Lufteinlassöffnung 11 vollständig verschließt.

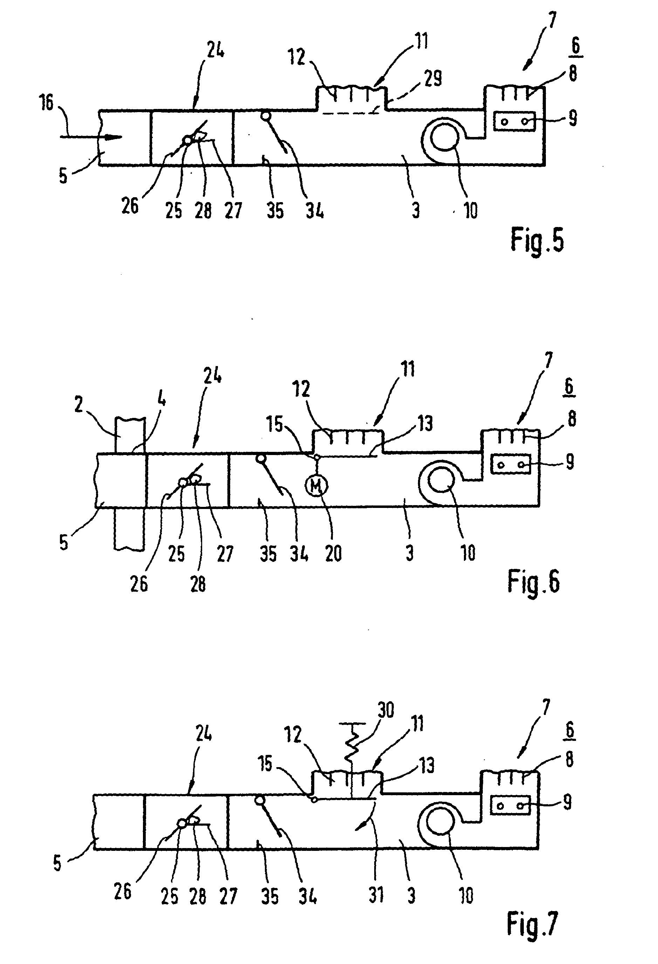

Die Figuren 5 bis 9 zeigen Ausführungsbeispiele der Erfindung, bei denen der Strömungsquerschnitt der vorzugsweise gebäudeaußenseitigen Lufteinlassöffnung 5 mit einer separaten Verschließeinrichtung 24 beliebig veränderbar ist. Bei der Verschließeinrichtung 24 handelt es sich bei den dargestellten Ausführungsbeispielen um einen selbsttätig arbeitenden Volumenstromregler. Dieser weist eine auf einer Welle 25 angeordnete Regelklappe 26 auf. Nicht dargestellt ist eine an der Regelklappe 26 angreifende Feder, z. B. Blattfeder, gegen die die Regelklappe 26 aus der gezeigten Offenstellung durch den in Richtung des Pfeils 16 strömenden Volumenstrom in ihre Schließstellung verschwenkbar ist.

Zur Dämpfung der Regelklappe 26 infolge plötzlicher Volumenstromschwankungen innerhalb des Luftkanals 3 ist auf der Abströmseite der Regelklappe 26 ein ortsfestes Halteelement 27 vorgesehen, auf dem ein Balg 28 angeordnet ist. Der Balg 28 weist eine nicht dargestellte Einlassöffnung auf, die im Bereich der Anströmseite der Regelklappe 26 vorgesehen ist.

Der als Verschließeinrichtung 24 ausgebildete Volumenstromregler wird auf einen gewünschten Sollwert eingestellt, so dass die erforderliche und gewünschte Außenluftrate durch Ansaugen von Luft in Richtung des Pfeils 16 gewährleistet ist. Der Sollwert des als Verschließeinrichtung 24 ausgebildeten Volumenstromreglers kann beispielsweise manuell eingestellt werden. Selbstverständlich ist es auch möglich, dass der Sollwert des Volumenstromreglers durch geeignete Maßnahmen motorisch veränderbar ist. Dies bietet sich insbesondere bei der zentralen Steuerung von mehreren Belüftungssystemen an.

Wird für den Raum 6 eine höhere Kühl- oder Heizleistung angeordert, so wird die Leistung der Luftfördereinrichtung 10 entsprechend erhöht. Ab Erreichen des eingestellten Sollwertes bleibt der Außenluftanteil konstant, während der über die weitere Lufteinlassöffnung 11 angesaugte Raumluftanteil steigt. Dies bietet sich beispielsweise im Kühlfall an, da dann nicht erst eine höhere Außenluftrate bis unter Raumtemperatur gekühlt werden muss, sondern lediglich die Raumluft mit der im Vergleich zur Außenluft niedrigeren Temperatur.

Des Weiteren wird durch die als Volumenstromregler ausgebildete Verschließeinrichtung 24 eine aufgrund von auf die Außenseite einer Fassade wirkenden Windlasten erhöhte Luftströmung begrenzt, da nur der Außenluftanteil bis zu dem eingestellten Sollwert über die Lufteinlassöffnung 5 in den Luftkanal 3 strömen kann.

Bei dem in Fig. 5 dargestellten Ausführungsbeispiel ist im Bereich der weiteren Lufteinlassöffnung 11 ein vorbestimmter Festwiderstand 29, z. B. in Form eines engeren Querschnitts oder einer einstellbaren Klappe, vorgesehen, damit auch Außenluft in Richtung des Pfeils 16 über die Luftauslassöffnung 5 angesaugt werden kann.

Bei dem in Fig. 6 dargestellten Ausführungsbeispiel ist der Strömungsquerschnitt der weiteren Lufteinlassöffnung 11 mit der Klappe 13 beliebig veränderbar, wobei an der Schwenkachse 15 der Klappe 13 der Stellmotor 20 angreift.

In Fig. 7 ist ein Ausführungsbeispiel dargestellt, bei dem an der Anströmseite der Klappe 13 eine Zugfeder 30 angreift. Bei steigendem, über die Lufteinlassöffnung 5 angesaugten Außenluftanteil wird die Klappe 13 gegen die Zugfeder 30 mehr und mehr in Richtung des Pfeils 31 verschwenkt, so dass auch Raumluft über die weitere Lufteinlassöffnung 11 in den Luftkanal 3 angesaugt werden kann.

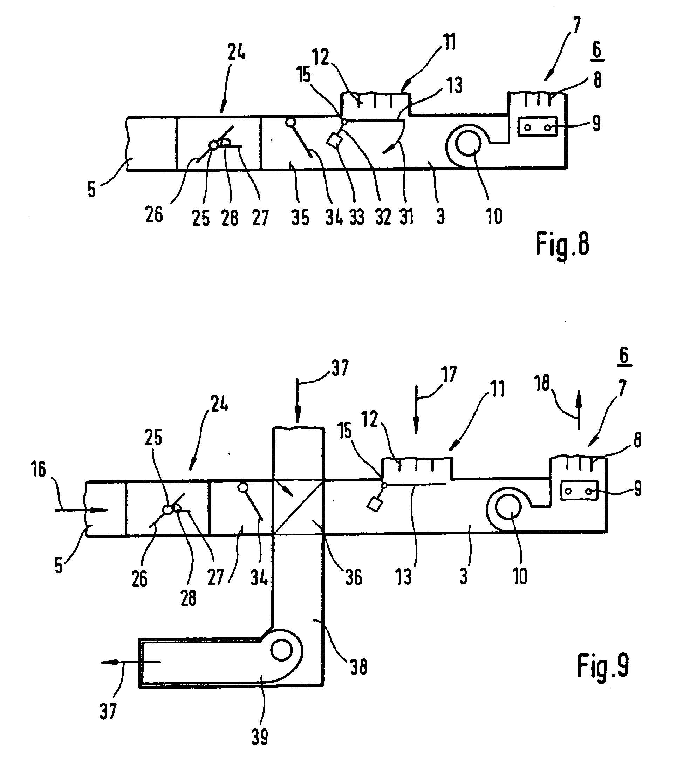

Bei der in Fig. 8 dargestellten Ausführungsform greift an der Klappe 13 über einen Hebelarm 32 ein Gewicht 33 an, so dass die Klappe 13 gegen die von dem Gewicht 33 resultierende Gewichtskraft in Richtung des Pfeils 31 verschwenkbar ist.

Um ein Strömen innerhalb des Luftkanals 3 entgegen die Strömungsrichtung 16 zu verhindern, ist in Strömungsrichtung 16 gesehen vor der weiteren Lufteinlassöffnung 11 eine Rückschlagklappe 34 vorgesehen, die im geschlossenen Zustand gegen einen luftkanalseitigen Anschlag 35 anliegt und so ein Strömen entgegen der Strömungsrichtung 16 verhindert.

Bei dem in Fig. 9 dargestellten Ausführungsbeispiel ist in dem Luftkanal 3 zwischen der Rückschlagklappe 34 und der weiteren Lufteinlassöffnung 11 noch ein Wärmetauscher 36 vorgesehen. Dieser entzieht der in Richtung des Pfeils 37 in einem Abluftkanal 38 strömenden Abluft die Wärme und gibt sie an die in Richtung des Pfeils 16 strömende Zuluft weiter. Um ein Strömen der Abluft in dem Abluftkanal 38 zu gewährleisten, ist eine weitere Luftfördereinrichtung 39 vorgesehen. Der Abluftkanal 38 durchgreift vorzugsweise eine nicht dargestellte Ausnehmung in der Gebäudeaußenwand, so dass die Abluft direkt in Richtung des Pfeils 37 nach außen transportiert werden kann.

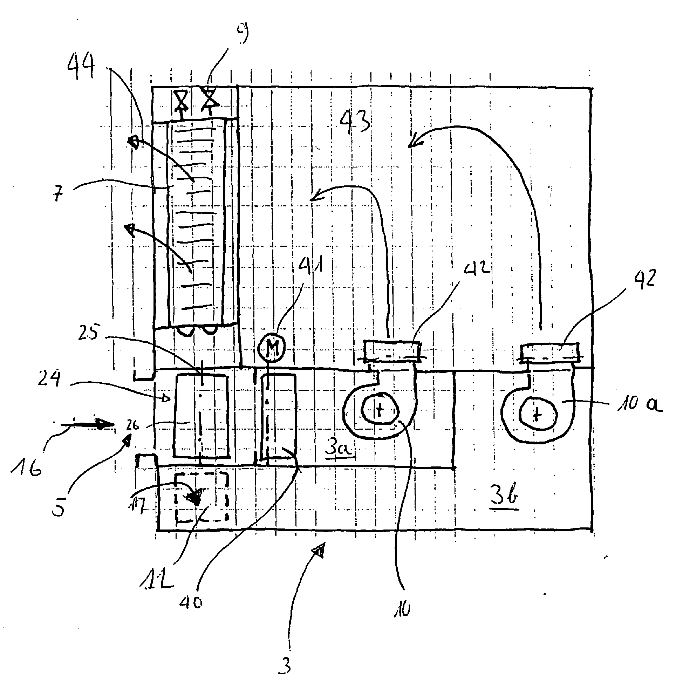

Fig. 10 zeigt ein weiteres Ausführungsbeispiel eines erfindungsgemäßen Belüftungssystems, das in dem dargestellten Beispiel als Unterflurgerät ausgebildet ist.

Das Belüftungssystem ist vorzugsweise bodenbündig in einem Raumboden eingelassen. Es Luftkanal 3 besteht aus einem Teilkanal 3a für Außenluft, der sich zwischen der Lufteinlassöffnung 5 und der Luftauslassöffnung 7 erstreckt, sowie aus einem Teilkanal 3b für Umluft. Der Teilkanal 3b erstreckt sich zwischen der weiteren Lufteinlassöffnung 11, über die Umluft aus dem Raum gezogen wird, sowie der gemeinsamen Luftauslassöffnung 7. Der Luftauslassöffnung 7 ist unmittelbar ein Wärmetauscher 9 vorgeschaltet.

In jedem Teilkanal 3a, 3b ist eine Luftfördereinrichtung 10, 10a vorgesehen. In dem Teilkanal 3a ist zudem eine Verschließeinrichtung 24 angeordnet, die eine auf einer Welle 25 gelagerte Klappe 26 aufweist. Die Verschließeinrichtung 24 ist beispielsweise als selbsttätig arbeitender Volumenstromregler ausgebildet. Zwischen der Verschließeinrichtung 24 und der Ansaugseite der Luftfördereinrichtung 10 ist ferner noch eine als Klappe 40 ausgebildete Verschließeinrichtung vorgesehen, wobei diese Klappe 40 mit einem Stellmotor 41 betätigbar ist.

In Strömungsrichtung gesehen hinter jeder Luftfördereinrichtung 10, 10a befindet sich je eine ein Strömen der Luft entgegen die bestimmungsgemäße Richtung verhindernde Einrichtung, die in dem dargestellten Ausführungsbeispiel als Rückschaltklappe 42 ausgebildet ist.

In dem dargestellten Ausführungsbeispiel münden die beiden Teilkanäle 3a, 3b hinter den beiden Luftfördereinrichtungen 10, 10a in eine Mischkammer 43, wobei die Mischkammer 43 selbst in die gemeinsame Luftauslassöffnung 7 übergeht, über die die Luft oberseitig in den zu belüftenden Raum ausgeblasen wird.

Selbstverständlich ist es auch möglich, dass statt der Mischkammer 43 die Teilkanäle 3a, 3b sich bis zu der gemeinsamen Luftauslassöffnung 7 erstrecken oder jeder Teilkanal 3a, 3b eine separate Luftauslassöffnung 7 umfasst.

## Patentansprüche

1. Belüftungssystem zur Raumbelüftung mit einem sich zwischen einer vorzugsweise gebäudeaußenseitigen Lufteinlassöffnung (5) und einer vorzugsweise rauminnenseitigen Luftauslassöffnung (7) erstreckenden Luftkanal (3), wobei in dem Luftkanal (3) eine Luftfördereinrichtung (10) sowie eine weitere Lufteinlassöffnung (11) zum Ansaugen von über dem Luftkanal (3) befindlicher Luft, insbesondere von Raumluft, vorgesehen sind, wobei die weitere Lufteinlassöffnung (11) auf der Ansaugseite der Luftfördereinrichtung (10) in dem Luftkanal (3) angeordnet ist, **dadurch gekennzeichnet, dass** der Strömungsquerschnitt der Lufteinlassöffnung (5) zur Bestimmung des über die Lufteinlassöffnung (5) angesaugten Luftstroms mittels einer Verschließeinrichtung (24), insbesondere mittels einer Klappe, veränderbar und/oder verschließbar ist und dass die Verschließeinrichtung (24) als selbsttätig arbeitender Regler ausgebildet ist.

2. Belüftungssystem nach Anspruch 1, **dadurch gekennzeichnet, dass** in dem Luftkanal (3) zwischen der Lufteinlassöffnung (5) und der weiteren Lufteinlassöffnung (11) eine ein Strömen der Luft entgegen die bestimmungsgemäße Richtung verhindernde Einrichtung, insbesondere eine Rückschlagklappe (34), vorgesehen ist.

3. Belüftungssystem nach Anspruch 1 oder 2, **dadurch gekennzeichnet, dass** in dem Luftkanal (3) zwischen der Lufteinlassöffnung (5) und der weiteren Lufteinlassöffnung (11) ein Wärmetauscher (9 bzw. 36) vorgesehen ist.

4. Belüftungssystem nach einem der Ansprüche 1 bis 3, **dadurch gekennzeichnet, dass** der Strömungsquerschnitt der weiteren Lufteinlassöffnung (11) zur Bestimmung des über die weitere Lufteinlassöffnung (11) angesaugten Luftstromes mittels einer Verschließeinrichtung, insbesondere mittels einer Klappe (13), veränderbar und/oder verschließbar ist.

5. Belüftungssystem nach Anspruch 4, **dadurch gekennzeichnet, dass** die Verschließeinrichtung mittels eines Stellelementes, insbesondere mittels eines Stellmotors (20), betätigbar ist.

6. Belüftungssystem nach Anspruch 5, **dadurch gekennzeichnet, dass** der Stellmotor (20) zur temperaturgeführten Betätigung der Verschließeinrichtung mit einer Temperaturmesseinrichtung (21), vorzugsweise mit einer die Raumtemperatur messenden Temperaturmesseinrichtung (21), verbunden ist.

7. Belüftungssystem nach Anspruch 5 oder 6, **dadurch gekennzeichnet, dass** der Stellmotor (20) zum Ausgleich der Eintrittsgeschwindigkeit der durch die Lufteinlassöffnung (5) eintretenden Luft zur Betätigung der Verschließeinrichtung mit einer Messeinrichtung zur Bestimmung der Luftströmungsgeschwindigkeit, vorzugsweise mit einer die Luftströmungsgeschwindigkeit in der Lufteinlassöffnung (5) messenden Messeinrichtung (23), verbunden ist.

8. Belüftungssystem nach Anspruch 4, **dadurch gekennzeichnet, dass** die Verschließeinrichtung gegen eine Kraft, insbesondere gegen eine Gewichts- oder Federkraft (33, 30), aus ihrer den Strömungsquerschnitt der weiteren Lufteinlassöffnung (11) verschließenden Position in die den Strömungsquerschnitt der weiteren Lufteinlassöffnung (11) freigebende Position verschwenkbar ist.

9. Belüftungssystem nach einem der Ansprüche 1 bis 8, **dadurch gekennzeichnet, dass** die Verschließeinrichtung (24) mittels eines Stellelementes, insbesondere mittels eines Stellmotors, betätigbar ist.

10. Belüftungssystem nach Anspruch 9, **dadurch gekennzeichnet, dass** der Stellmotor der Verschließeinrichtung (24) in der Lufteinlassöffnung (5) zur temperaturgeführten Betätigung der Verschließeinrichtung (24) mit einer Temperaturmesseinrichtung (21), vorzugsweise mit einer die Außentemperatur messenden Temperaturmesseinrichtung, verbunden ist.

11. Belüftungssystem nach einem der Ansprüche 1 bis 10, **dadurch gekennzeichnet, dass** im Bereich der Luftauslassöffnung(en) (7) ein Wärmetauscher (9) vorgesehen ist.

12. Belüftungssystem nach einem der Ansprüche 1 bis 11, **dadurch gekennzeichnet, dass** das Belüftungssystem als Unterflurgerät ausgebildet ist.

13. Belüftungssystem nach einem der Ansprüche 1 bis 11, **dadurch gekennzeichnet, dass** das Belüftungssystem als Brüstungsgerät ausgebildet ist.

14. Belüftungssystem nach einem der Ansprüche 1 bis 11, **dadurch gekennzeichnet, dass** das Belüftungssystem als Deckengerät ausgebildet ist.

## Claims

1. Ventilation system for the ventilation of a room, the said ventilation system having an air duct, which extends between an air inlet opening (5) that is preferably on the outside of the building and an air outlet opening (7) that is preferably on the inside of the room, wherein an air conveying device (10) as well as an additional air inlet opening (11) are provided in the air duct (3) for the drawing in of air, more especially of room air that is situated above the air duct, wherein the additional air inlet opening (11) is disposed on the intake side of the air conveying device (10) in the air duct (3), **characterised in that** the flow cross-section of the air inlet opening (5) is changeable and/or closable through the intermediary of a closing device (24), more especially through the intermediary of a flap, to regulate the air flow drawn in via the air inlet opening (5), and **in that** the closing device (24) is in the form of an independently operating controlling means.

2. Ventilation system according to claim 1, **characterised in that** a device that prevents the air flowing in opposition to the intended direction, more especially a non return flap (34), is provided in the air duct (3) between the air inlet opening (5) and the additional air inlet opening (11).

3. Ventilation system according to claim 1 or 2, **characterised in that** a heat exchanger (9 or respectively 36) is provided in the air duct (3) between the air inlet opening (5) and the additional air inlet opening (11).

4. Ventilation system according to one of the claims 1 to 3, **characterised in that** the flow cross-section of the additional air inlet opening (11) is changeable and/or closable through the intermediary of a closing device, more especially through the intermediary of a flap (13), to regulate the air flow taken in via the additional air inlet opening (11).

5. Ventilation system according to claim 4, **characterised in that** the closing device is actuatable through the intermediary of an adjusting member, more especially through the intermediary of a setting motor (20).

6. Ventilation system according to claim 5, **characterised in that** the setting motor (20) is connected to a temperature measuring device (21), preferably to a temperature measuring device (21) measuring the room temperature, for the temperature-lead actuation of the closing device.

7. Ventilation system according to claim 5 or 6, **characterised in that** the setting motor (20), for equalising the speed of entry of the air entering through the air inlet opening (5) for actuating the dosing device, is connected to a measuring device for determining the air flow speed, preferably to a measuring device (23) measuring the air flow speed in the air inlet opening (5).

8. Ventilation system according to claim 4, **characterised in that** the closing device is pivotable in opposition to a force, more especially in opposition to a weight or a spring force (33, 30), from its position closing the flow cross-section of the additional air inlet opening (11) into the position opening the flow cross-section of the additional air inlet opening (11).

9. Ventilation system according to one of claims 1 to 8, **characterised in that** the closing device (24) is actuatable through the intermediary of an adjusting member, more especially through the intermediary of a setting motor.

10. Ventilation system according to claim 9, **characterised in that** the setting motor of the closing device (24) is connected to a temperature measuring device (21), preferably to a temperature measuring device measuring the outside temperature, in the air inlet opening (5) for the temperature-lead actuation of the closing device (24).

11. Ventilation system according to one of claim 1 to 10, **characterised in that** a heat exchanger (9) is provided in the region of the air outlet opening(s) (7).

12. Ventilation system according to one of claims 1 to 11, **characterised in that** the ventilation system is in the form of an under-floor device.

13. Ventilation system according to one of claim 1 to 11, **characterised in that** the ventilation system is in the form of a wall device.

14. Ventilation system according to one of claims 1 to 11, **characterised in that** the ventilation system is in the form of a ceiling device.

## Revendications

1. Système de ventilation pour la ventilation d'un local, avec un conduit d'air (3) s'étendant entre une ouverture d'admission d'air (5) située de préférence sur le côté extérieur du bâtiment et une ouverture d'évacuation d'air (7) située de préférence sur le côté intérieur du local, sachant qu'il est prévu dans le conduit d'air (3) un dispositif de refoulement d'air (10) ainsi qu'une ouverture supplémentaire (11) d'admission d'air pour aspirer de l'air se trouvant au-dessus du conduit d'air (3), notamment de l'air du local, et sachant que l'ouverture supplémentaire (11) d'admission d'air est disposée dans le conduit d'air (3) sur le côté d'aspiration du dispositif de refoulement d'air (10), **caractérisé en ce que** la section d'écoulement de l'ouverture d'admission d'air (5) peut, au moyen d'un dispositif de fermeture (24), notamment au moyen d'un volet, être modifiée et/ou fermée afin de définir le flux d'air aspiré via l'ouverture d'admission d'air (5), et **en ce que** le dispositif de fermeture (24) est conçu comme régulateur à fonctionnement automatique.

2. Système de ventilation selon la revendication 1, **caractérisé en ce qu'**un dispositif empêchant un écoulement de l'air à l'encontre du sens prévu, notamment un clapet anti-retour (34), est prévu dans le conduit d'air (3) entre l'ouverture d'admission d'air (5) et l'ouverture supplémentaire (11) d'admission d'air.

3. Système de ventilation selon la revendication 1 ou 2, **caractérisé en ce qu'**un échangeur de chaleur (9 ou 36) est prévu dans le conduit d'air (3) entre l'ouverture d'admission d'air (5) et l'ouverture supplémentaire (11) d'admission d'air.

4. Système de ventilation selon l'une des revendications 1 à 3, **caractérisé en ce que** la section d'écoulement de l'ouverture supplémentaire (11) d'admission d'air peut, au moyen d'un dispositif de fermeture, notamment au moyen d'un volet (13), être modifiée et/ou fermée afin de définir le flux d'air aspiré via l'ouverture supplémentaire (11) d'admission d'air.

5. Système de ventilation selon la revendication 4, **caractérisé en ce que** le dispositif de fermeture peut être actionné au moyen d'un élément de commande, notamment au moyen d'un servomoteur (20).

6. Système de ventilation selon la revendication 5, **caractérisé en ce que** le servomoteur (20) est, en vue de l'actionnement du dispositif de fermeture en fonction de la température, relié à un dispositif (21) de mesure de température, de préférence un dispositif (21) de mesure de température mesurant la température du local.

7. Système de ventilation selon la revendication 5 ou 6, **caractérisé en ce que** le servomoteur (20) est, afin de compenser la vitesse d'entrée de l'air pénétrant par l'ouverture d'admission d'air (5) en vue de l'actionnement du dispositif de fermeture, relié à un dispositif de mesure destiné à déterminer la vitesse d'écoulement de l'air, de préférence à un dispositif de mesure (23) mesurant la vitesse d'écoulement de l'air dans l'ouverture d'admission d'air (5).

8. Système de ventilation selon la revendication 4, **caractérisé en ce que** le dispositif de fermeture peut, à l'encontre d'une force, notamment d'une force massique ou de ressort (33, 30), être pivoté de sa position fermant la section d'écoulement de l'ouverture supplémentaire (11) d'admission d'air dans la position libérant la section d'écoulement de l'ouverture supplémentaire (11) d'admission d'air.

9. Système de ventilation selon l'une des revendications 1 à 8, **caractérisé en ce que** le dispositif de fermeture (24) peut être actionné au moyen d'un élément de commande, notamment au moyen d'un servomoteur.

10. Système de ventilation selon la revendication 9, **caractérisé en ce que** le servomoteur (20) du dispositif de fermeture (24) dans l'ouverture d'admission d'air (5) est, en vue de l'actionnement du dispositif de fermeture (24) en fonction de la température, relié à un dispositif (21) de mesure de température, de préférence un dispositif (21) de mesure de température mesurant la température extérieure.

11. Système de ventilation selon l'une des revendications 1 à 10, **caractérisé en ce qu'**un échangeur de chaleur (9) est prévu dans la région de la ou des ouvertures d'évacuation d'air (7).

12. Système de ventilation selon l'une des revendications 1 à 11, **caractérisé en ce que** le système de ventilation est réalisé sous forme d'appareil sous plancher.

13. Système de ventilation selon l'une des revendications 1 à 11, **caractérisé en ce que** le système de ventilation est réalisé sous forme d'appareil en appui.

14. Système de ventilation selon l'une des revendications 1 à 11, **caractérisé en ce que** le système de ventilation est réalisé sous forme d'appareil de plafond.
